Europäisches Patentamt

European Patent Office

Office européen des brevets

(19)

(11) Publication number: **0 321 278**
A1

## (12) EUROPEAN PATENT APPLICATION

(21) Application number: 88311937.2

(22) Date of filing: 16.12.88

(51) Int. Cl.4: **G 02 B 6/44**
**H 01 B 11/22**

(30) Priority: 18.12.87 GB 8729588

(43) Date of publication of application:
21.06.89 Bulletin 89/25

(84) Designated Contracting States:
AT BE CH DE ES FR GB GR IT LI LU NL SE

(71) Applicant: FOCAS LIMITED
16 St. Martin's-Le-Grand
London EC1A 4EJ (GB)

(72) Inventor: Baker, James Charles
8 St. Lawrence Road
Lechlade Gloucestershire GL7 3BZ (GB)

(74) Representative: Wayte, Dennis Travers et al
BOULT, WADE & TENNANT 27 Furnival Street
London, EC4A 1PQ (GB)

(54) Cable arrangement.

(57) A cable arrangement comprises an electrical conductor (1) having an optical fibre cable (2) helically wrapped thereon, the optical fibre cable (2) comprising a tubular member (4, 5) containing one or more optical fibres (3) capable of transverse movement in the tubular member (2) whereby signals transmitted over the optical fibre cable (2) are substantially unaffected by temperature changes causing changes in the length of the electrical conductor (1).

FIG. 2.

## Description

### CABLE ARRANGEMENT

This invention relates to a cable arrangement, and particularly to a cable arrangement comprising an elongate electrical conductor having an optical fibre cable helically wrapped thereon.

Such arrangements are known where the conductor is a conductor of an overhead electrical power supply system, and optical fibre cable serving for the transmission of signals between positions through which the conductor passes. In such arrangements the optical fibre cable can comprise one or more optical fibres or fibre bundles tightly contained in an outer protective covering.

A difficulty which arises with such arrangements is that the cable must generally follow any changes in length of the conductor due, for example, to temperature changes, ice loading or wind forces and changes in length of the cable can have an unacceptable effect on signals being transmitted over the cable.

According to this invention a cable arrangement as set out above is characterised in that the cable comprises a tubular member containing one or more optical fibres or fibre bundles capable of transverse movement in the tubular member.

With the arrangement of the invention the tubular member can follow any changes in length of the conductor but the optical fibre or fibres are not constrained so to follow due to the ability to move transversely within the tubular member relative to the axis of the conductor. In effect the optical fibres ravel further or unravel as the conductor decreases or increases in length respectively, the limits of this being set by contact of the fibre or fibres with the wall of the tubular member.

The fibre or fibres are thus effectively de-coupled from the conductor and thus given strain relief relative thereto. The potential strain relief that can be provided is increased as the pitch to diameter ratio of the helically wound cable is reduced, but the strain experienced by the cable due to curvature thereof also increases as the ratio is reduced, and in practice a balance is achieved between adequate strain relief without too much curvature strain.

A typical earth conductor of 20mm outer diameter in an overhead electrical power supply system can experience as much as 0.1% elongation due to a combination of icing and cross-winds, and if the limit for curvature strain in the cable is set at 0.025%, then the wrapping pitch for a cable with a tubular member having an inner diameter of 2mm must be in the range of 225-600 mm which is a realistic range. Known spinning machines as used to wrap cables along conductors give a wrapping pitch of about 500 mm which gives a potential strain relief for the cable of 0.18% with a curvature strain of 0.01%.

Preferably the tubular member is filled with a viscous material, for example a thixotropic jelly, which serves a damp movement of the fibre of fibres in the tubular member.

This invention will now be described by way of example with reference to the drawing, in which:-

Figure 1 is a side elevational view of a cable arrangement according to the invention; and

Figures 2 and 3 are sectional views on the line X-X in Figure 1.

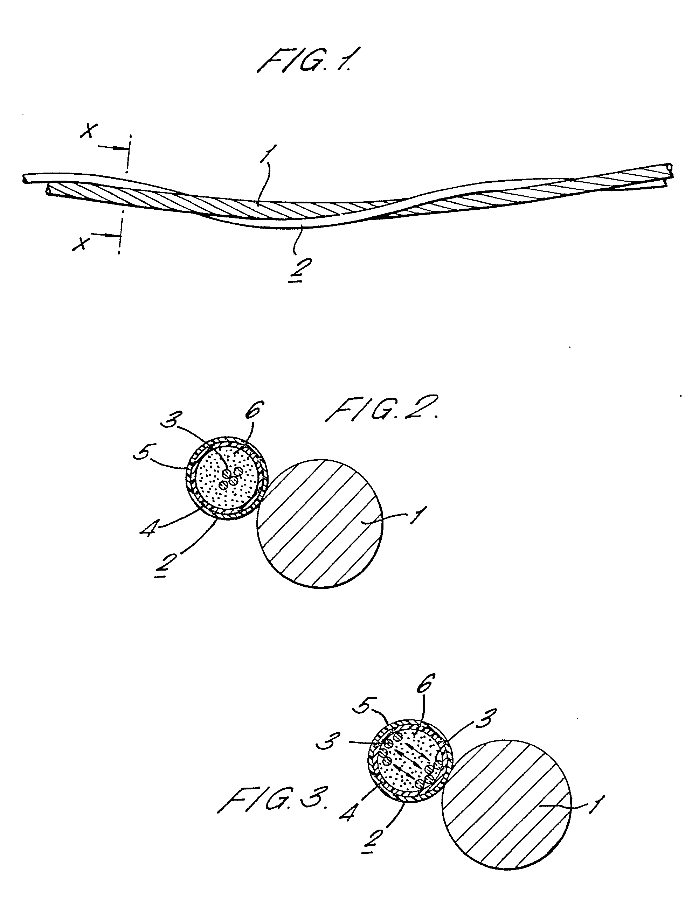

The cable arrangement shown in Figure 1 comprises an elongate electrical conductor 1 which can be earth conductor of an overhead electrical power supply system, having a tubular member 2 helically wound thereon, the tubular 2 containing four optical fibres 3 (not shown in Figure 1). The tubular member 2 comprises a jacket 4 of high tensile strength material, for example KEVLAR (trade mark) to provide strength and resistance to damage, for example from shotgun pellets, and a jacket 5 of heat-resistant material, for example a silicone-based material. The tubular member 2 is filled with a thixotropic jelly material 6.

As shown in Figure 2, the arrangement is initially set up with the fibres 3 substantially along the axis of the tubular member 2, whereby the fibres 3 are able to move transversely of the tubular member 2 relative to the axis of the conductor 1, as indicated by the arrows in Figure 3. Any change in length of the conductor 1 will be followed by the tubular member 2 but not by the fibres 3 which can move laterally within the tubular member 2 either away from the conductor 1 if the conductor 1 shortens in length, or towards the conductor 1 if the conductor 1 lengthens; Figure 3 shows the fibres 3 at the limits of such movement. Any such movement of the fibres 3 in the tubular member 2 is dampened by the material 6 which fills the tubular member 2.

## Claims

1. A cable arrangement comprising an elongate electrical conductor (1) having an optical fibre cable (2) helically wrapped thereon, characterised in that the cable (2) comprises a tubular member (4, 5) containing one or more optical fibres (3) or fibre bundles (3) capable of transverse movement in the tubular member (4, 5).

2. A cable arrangement as claimed in Claim 1, characterised in that the tubular member (4, 5) is filled with a viscous material (6) which serves to damp movement of the optical fibre (3) or fibres (3) in the tubular member (4, 5).

3. A cable arrangement as claimed in Claim 1 or Claim 2, characterised in that the tubular member comprises a jacket (4) of high tensile strength material.

4. A cable arrangement as claimed in any preceding claim, characterised in that the tubular member comprising a jacket (5) of heat-resistant material.

FIG.1.

FIG.2.

FIG.3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y,P | DE-A-3 702 781 (SIEMENS)<br>* Claims *<br>--- | 1 | G 02 B 6/44<br>H 01 B 11/22 |
| Y | FR-A-2 551 253 (LTT)<br>* Page 3, line 16 - page 4, line 25 *<br>--- | 1 | |
| Y | US-A-4 342 500 (U. OESTREICH)<br>* Abstract * | 1 | |
| A | | 2,3 | |
| A | EP-A-0 107 796 (AEG)<br>* Abstract *<br>--- | 4 | |
| A | DE-A-3 201 018 (M.B.B.)<br>* Page 3, lines 1-29 *<br>--- | 1 | |
| A | PATENT ABSTRACTS OF JAPAN, vol. 7, no. 290 (P-245)[1435], 24th December 1983;<br>& JP-A-58 162 912 (FURUKAWA DENKI KOGYO K.K.) 27-09-1983<br>* Abstract *<br>--- | 1 | |
| A | GB-A-2 164 171 (BICC)<br>* Abstract *<br>--- | 1 | |
| A | GB-A-2 169 094 (T.C.)<br>* Abstract *<br>----- | 1 | |

**TECHNICAL FIELDS SEARCHED (Int. Cl.4)**

G 02 B
H 01 B

The present search report has been drawn up for all claims

| Place of search | Date of completion of the search | Examiner |
|---|---|---|
| THE HAGUE | 29-03-1989 | PFAHLER R. |

EPO FORM 1503 03.82 (P0401)